(19) Europäisches Patentamt
European Patent Office
Office européen des brevets

(11) EP 4 667 523 A1

(12) EUROPEAN PATENT APPLICATION
published in accordance with Art. 153(4) EPC

(43) Date of publication:
24.12.2025 Bulletin 2025/52

(21) Application number: 24780357.0

(22) Date of filing: 26.03.2024

(51) International Patent Classification (IPC):
*C08L 11/02* *(2006.01)* *C08F 36/18* *(2006.01)*
*C09J 111/02* *(2006.01)*

(52) Cooperative Patent Classification (CPC):
C08F 36/18; C08L 11/02; C09J 111/02

(86) International application number:
PCT/JP2024/012046

(87) International publication number:
WO 2024/204249 (03.10.2024 Gazette 2024/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 29.03.2023 JP 2023053597

(71) Applicant: Denka Company Limited
Tokyo 103-8338 (JP)

(72) Inventor: NAGAOKA, Kota
Tokyo 103-8338 (JP)

(74) Representative: Gulde & Partner
Patent- und Rechtsanwaltskanzlei mbB
Berliner Freiheit 2
10785 Berlin (DE)

# (54) CHLOROPRENE-BASED LATEX COMPOSITION, METHOD FOR PRODUCING CHLOROPRENE-BASED LATEX COMPOSITION, AND AQUEOUS ADHESIVE

(57) A chloroprene-based latex composition that has little odor and is excellent in storage stability and mechanical stability, a method for producing the chloroprene-based latex composition, and an aqueous adhesive comprising the chloroprene-based latex composition are provided.

According to the present invention, there is provided a chloroprene-based latex composition comprising a chloroprene-based polymer and water, wherein the chloroprene-based latex composition comprises at least one chloroprene dimer selected from a group consisting of a chloroprene dimer (a) represented by formula (a), a chloroprene dimer (b) represented by formula (b), and a chloroprene dimer (c) represented by formula (c), and when an amount of the water is adjusted to obtain the chloroprene-based latex composition having a solid content concentration of 50% by mass, a total content of the chloroprene dimer (a), the chloroprene dimer (b), and the chloroprene dimer (c) in the chloroprene-based latex composition having a solid content concentration of 50% by mass is 0.0400 to 0.1500 parts by mass with respect to 100 parts by mass of the chloroprene-based latex composition having a solid content concentration of 50% by mass.

EP 4 667 523 A1

## Description

### TECHNICAL FIELD

The present invention relates to a chloroprene-based latex composition, a method for producing a chloroprene-based latex composition, and an aqueous adhesive.

### BACKGROUND ART

A chloroprene-based latex is used in various fields, such as a material for an aqueous adhesive used when manufacturing civil engineering and construction products, plywood, furniture, shoes, wetsuits, and the like, a material for dip-molded products such as gloves for labor work, gloves for experiments, medical gloves, rubber threads, and balloons, and a material for a waterproof coating film in the civil engineering and construction fields.

Patent Literature 1 discloses a polychloroprene latex composition obtained by emulsion polymerizing chloroprene and an ethylenically unsaturated carboxylic acid in the presence of a water-soluble polymer having a protective colloid action. In addition, Patent Literature 2 discloses a polychloroprene-based latex composition obtained by emulsion polymerizing chloroprene alone, or chloroprene and a monomer copolymerizable with the chloroprene, in the presence of a polyoxyethylene alkyl ether having an HLB value of 14 to 19 and a polyvinyl alcohol.

### CITATION LIST

### PATENT LITERATURE

Patent Literature 1 Japanese Patent No. 3294910
Patent Literature 2 JP-A-2005-008859

### SUMMARY OF INVENTION

### TECHNICAL PROBLEM

A chloroprene-based latex composition produced using a polyvinyl alcohol as an emulsifier is used as an aqueous adhesive, for example, because of its excellent tackiness. However, the chloroprene-based latex composition produced using the polyvinyl alcohol as the emulsifier tends to have lower storage stability and mechanical stability than a chloroprene-based latex using an emulsifier other than the polyvinyl alcohol, and in particular, agglomerates may be generated when subjected to vibration during transportation or a mechanical shearing force by a stirrer or a pump. In addition, the chloroprene-based latex composition may have an odor due to a chloroprene dimer or the like generated during polymerization of a chloroprene-based polymer, and it has been difficult to obtain a chloroprene-based latex composition that has little odor and is excellent in storage stability and mechanical stability.

The present invention has been made in view of such circumstances, and provides a chloroprene-based latex composition with little odor and excellent storage stability and mechanical stability, a method for producing the chloroprene-based latex composition, and an aqueous adhesive including the chloroprene-based latex composition.

### SOLUTION TO PROBLEM

According to the present invention, there is provided a chloroprene-based latex composition comprising a chloroprene-based polymer and water, wherein the chloroprene-based latex composition comprises at least one chloroprene dimer selected from a group consisting of a chloroprene dimer (a) represented by formula (a), a chloroprene dimer (b) represented by formula (b), and a chloroprene dimer (c) represented by formula (c), and when an amount of the water is adjusted to obtain the chloroprene-based latex composition having a solid content concentration of 50% by mass, a total content of the chloroprene dimer (a), the chloroprene dimer (b), and the chloroprene dimer (c), in the chloroprene-based latex composition having a solid content concentration of 50% by mass, is 0.0400 to 0.1500 parts by mass with respect to 100 parts by mass of the chloroprene-based latex composition having a solid content concentration of 50% by mass.

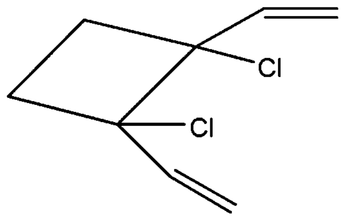

(a)

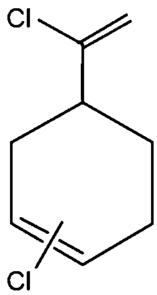

(b)

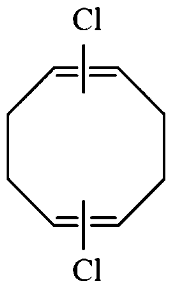

(c)

The present inventors have conducted intensive studies and found that in a chloroprene-based latex composition containing a chloroprene-based polymer and water, a chloroprene-based latex composition with little odor and excellent storage stability and mechanical stability can be obtained by highly adjusting its production conditions to ensure that the chloroprene-based latex composition comprises at least one chloroprene dimer selected from a group consisting of a chloroprene dimer (a) represented by formula (a), a chloroprene dimer (b) represented by formula (b), and a chloroprene dimer (c) represented by formula (c), and that the total content thereof is within a specific numerical range, thereby completing the present invention.

Hereinafter, various embodiments of the present invention will be illustrated. The embodiments shown below can be combined with each other.

[1] A chloroprene-based latex composition comprising a chloroprene-based polymer and water, wherein;
the chloroprene-based latex composition comprises at least one chloroprene dimer selected from a group consisting of a chloroprene dimer (a) represented by formula (a), a chloroprene dimer (b) represented by formula (b), and a chloroprene dimer (c) represented by formula (c); and when an amount of the water is adjusted to obtain a chloroprene-based latex composition having a solid content concentration of 50% by mass, a total content of the chloroprene dimer (a), the chloroprene dimer (b), and the chloroprene dimer (c) in the chloroprene-based latex composition having a solid content concentration of 50% by mass is 0.0400 to 0.1500 parts by mass with respect to 100 parts by mass of the chloroprene-based latex composition having a solid content concentration of 50% by mass.

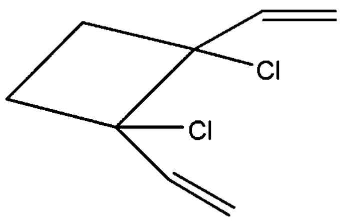

(a)

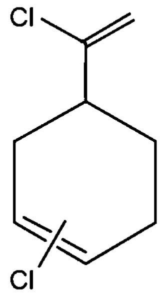

(b)

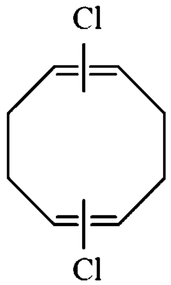

(c)

[2] The chloroprene-based latex composition of [1], wherein a content of the chloroprene dimer (a) in the chloroprene-based latex composition having a solid content concentration of 50% by mass is 0.0050 to 0.0500 parts by mass with respect to 100 parts by mass of the chloroprene-based latex composition having a solid content concentration of 50% by mass; a content of the chloroprene dimer (b) in the chloroprene-based latex composition having a solid content concentration of 50% by mass is 0.0100 to 0.1000 parts by mass with respect to 100 parts by mass of the chloroprene-based latex composition having a solid content concentration of 50% by mass; and a content of the chloroprene dimer (c) in the chloroprene-based latex composition having a solid content concentration of 50% by mass is 0 to 0.0500 parts by mass with respect to 100 parts by mass of the chloroprene-based latex composition having a solid content concentration of 50% by mass.

[3] The chloroprene-based latex composition of [1] or [2], wherein the chloroprene-based polymer comprises a monomer unit derived from chloroprene and a monomer unit derived from a vinyl monomer containing a carboxyl group.

[4] The chloroprene-based latex composition of any one of [1] to [3], wherein the chloroprene-based polymer comprises 0.01 to 5.00 parts by mass of the monomer unit derived from the vinyl monomer containing a carboxyl group with respect to 100 parts by mass of the monomer unit derived from chloroprene.

[5] The chloroprene-based latex composition of [3] or [4], wherein the vinyl monomer containing a carboxyl group comprises an $\alpha,\beta$-unsaturated carboxylic acid.

[6] The chloroprene-based latex composition of any one of [1] to [5], further comprising a polyvinyl alcohol.

[7] The chloroprene-based latex composition of any one of [3] to [5], wherein the chloroprene-based polymer comprises a graft polymer comprising the monomer unit derived from chloroprene, the monomer unit derived from the vinyl monomer containing a carboxyl group, and a structure derived from a polyvinyl alcohol.

[8] The chloroprene-based latex composition of [7], wherein the chloroprene-based polymer comprises 0.30 to 5.00 parts by mass of the structure derived from the polyvinyl alcohol with respect to 100 parts by mass of the chloroprene-based polymer.

[9] A method for producing a chloroprene-based latex composition, the method comprising a polymerization step of polymerizing a raw material monomer comprising a chloroprene monomer until a final polymerization conversion rate is reached, wherein the polymerization step comprises a raw material monomer divided addition step, wherein in the polymerization step, an initial addition rate of the raw material monomer at a start of polymerization is 10.0 to 70.0% by mass with respect to 100% by mass of a total amount of the raw material monomer used for the polymerization, wherein in the raw material monomer divided addition step, a remaining raw material monomer is added in divided portions after the start of polymerization, the divided addition is started before 25% by mass of the raw material monomer used for the polymerization is converted, and the divided addition is performed over a period of 20 or more, when a polymerization time from the start of polymerization to reaching the final polymerization conversion rate is 100.

[10] An aqueous adhesive comprising the chloroprene-based latex composition of any one of [1] to [8].

## ADVANTAGEOUS EFFECTS OF INVENTION

According to the present invention, a chloroprene-based latex composition with little odor and excellent storage stability and mechanical stability, a method for producing the chloroprene-based latex composition, and an aqueous adhesive including the chloroprene-based latex composition are provided.

## DESCRIPTION OF EMBODIMENTS

Hereinafter, the present invention will be described in detail by illustrating embodiments of the present invention. The present invention is not limited in any way by these descriptions. The respective features of the embodiments of the present invention shown below can be combined with each other. In addition, an invention can be independently established for each feature.

### 1. Chloroprene-based Polymer Latex Composition

The chloroprene-based latex composition according to the present invention comprises a chloroprene-based polymer and water. In addition, the chloroprene-based latex composition according to the present invention comprises at least one chloroprene dimer selected from a group consisting of a chloroprene dimer (a) represented by formula (a), a chloroprene dimer (b) represented by formula (b), and a chloroprene dimer (c) represented by formula (c). In the chloroprene-based latex composition according to the present invention, when an amount of the water is adjusted to obtain a chloroprene-based latex composition having a solid content concentration of 50% by mass, a total content of the chloroprene dimer (a), the chloroprene dimer (b), and the chloroprene dimer (c), in the chloroprene-based latex composition having a solid content concentration of 50% by mass, is 0.0400 to 0.1500 parts by mass with respect to 100 parts by mass of the chloroprene-based latex composition having a solid content concentration of 50% by mass. Hereinafter, each component will be described in detail.

### 1.1 Chloroprene-based Polymer

In the present invention, a chloroprene-based polymer means a polymer containing a monomer unit derived from 2-chloro-1,3-butadiene (hereinafter referred to as chloroprene). Examples of the chloroprene-based polymer include a homopolymer of chloroprene, a copolymer of chloroprene (a copolymer of chloroprene and a monomer copolymerizable with chloroprene), and the like. The chloroprene-based polymer according to one embodiment of the present invention can be a copolymer having a monomer unit derived from a monomer other than a chloroprene monomer. As described later, the chloroprene-based polymer according to one embodiment of the present invention can contain a monomer unit derived from a vinyl monomer containing a carboxyl group. In addition, the chloroprene-based polymer according to the present invention may contain a structure derived from a polyvinyl alcohol.

The chloroprene-based polymer according to one embodiment of the present invention can contain a monomer unit derived from chloroprene and a monomer unit derived from a vinyl monomer containing a carboxyl group. The vinyl monomer containing a carboxyl group can include an $\alpha,\beta$-unsaturated carboxylic acid. Examples of the $\alpha,\beta$-unsaturated carboxylic acid include unsaturated monocarboxylic acids such as acrylic acid, methacrylic acid, crotonic acid, and 3-butenoic acid; unsaturated dicarboxylic acids such as maleic acid, fumaric acid, and itaconic acid; monoesters of unsaturated dicarboxylic acids such as monomethyl maleate, monomethyl fumarate, and monomethyl itaconate; unsaturated polycarboxylic acids; and esters of unsaturated polycarboxylic acids, and it is preferable to include (meth)acrylic acid and its esters, and more preferable to include methacrylic acid.

The chloroprene-based polymer according to one embodiment of the present invention can include a graft polymer containing a monomer unit derived from chloroprene, a monomer unit derived from a vinyl monomer containing a carboxyl group, and a structure derived from a polyvinyl alcohol.

It is considered that in the chloroprene-based polymer according to one embodiment of the present invention, a polymer containing a monomer unit derived from chloroprene and a monomer unit derived from a vinyl monomer containing a carboxyl group is graft-copolymerized with a polyvinyl alcohol, and because a polyvinyl alcohol structure exists around the chloroprene monomer units, this allows for more stable dispersion in water and enhances storage stability and mechanical stability.

It is presumed that the graft polymer according to one embodiment of the present invention includes a branch chain containing a monomer unit derived from chloroprene and a monomer unit derived from a vinyl monomer containing a carboxyl group, and a trunk chain containing a structure derived from a polyvinyl alcohol.

As described above, the chloroprene-based polymer according to the present invention means a polymer containing a monomer unit derived from chloroprene, and includes a polymer containing a monomer unit derived from chloroprene and a monomer unit derived from a vinyl monomer containing a carboxyl group. In addition, the chloroprene-based polymer according to the present invention includes both a graft polymer graft-copolymerized with a polyvinyl alcohol and a polymer not graft-copolymerized with the polyvinyl alcohol (a polymer having no polyvinyl alcohol structure).

The chloroprene-based polymer according to the present invention can also contain a structure derived from other compounds (for example, monomers) other than chloroprene, a vinyl monomer containing a carboxyl group, and a polyvinyl alcohol. Examples of other monomers include 2,3-dichloro-1,3-butadiene, 1-chloro-1,3-butadiene, butadiene, isoprene, styrene, ethylene, unsaturated nitriles (acrylonitrile, methacrylonitrile, etc.), sulfur, and the like. These can be used alone or in combination of two or more.

For example, commercially available chloroprene may contain a small amount of 1-chloro-1,3-butadiene as an impurity. Such 2-chloro-1,3-butadiene containing a small amount of 1-chloro-1,3-butadiene can also be used as the chloroprene according to the present invention.

The chloroprene-based polymer according to one embodiment of the present invention can contain 30% by mass or less of monomer units and structures derived from other compounds other than the above-mentioned chloroprene, vinyl monomer containing a carboxyl group, and polyvinyl alcohol, with respect to 100% by mass in total of monomer units derived from the chloroprene and the vinyl monomer containing a carboxyl group in the chloroprene-based polymer. The content of the structure derived from other compounds is, for example, 0, 5, 10, 15, 20, 25, or 30% by mass, and may be within a range between any two of the numerical values exemplified here. By setting the content within the above numerical range, the obtained chloroprene-based polymer can exhibit effects due to copolymerization of other monomers without impairing the properties derived from chloroprene and the like.

The chloroprene-based polymer according to one embodiment of the present invention can also be composed of a non-grafted polymer consisting of a chloroprene monomer unit and a vinyl monomer unit containing a carboxyl group, and a graft polymer consisting of a chloroprene monomer unit, a vinyl monomer unit containing a carboxyl group, and a structure derived from a polyvinyl alcohol.

The chloroprene-based polymer according to one embodiment of the present invention preferably contains 95 to 99.97 parts by mass of the monomer unit derived from chloroprene, with respect to 100 parts by mass of the chloroprene-based polymer. The content of the monomer unit derived from chloroprene is, for example, 95, 96, 97, 98, 99, 99.9, or 99.97 parts by mass, and may be within a range between any two of the numerical values exemplified here.

The chloroprene-based polymer according to one embodiment of the present invention preferably contains 0.01 to 5.00 parts by mass of the monomer unit derived from a vinyl monomer containing a carboxyl group with respect to 100 parts by mass of the monomer unit derived from chloroprene contained in the chloroprene-based latex composition. The content of the monomer unit derived from a vinyl monomer containing a carboxyl group is, for example, 0.01, 0.02, 0.05, 0.10, 0.20, 0.50, 1.00, 2.00, 3.00, 4.00, or 5.00 parts by mass, and may be within a range between any two of the numerical values exemplified here.

The chloroprene-based latex composition according to one embodiment of the present invention may contain a part of the added vinyl monomer containing a carboxyl group in a state not included in the chloroprene-based polymer, that is, in a free state. The free vinyl monomer containing a carboxyl group will be described later.

The chloroprene-based polymer according to one embodiment of the present invention preferably contains 0.30 to 5.00 parts by mass of a structure derived from a polyvinyl alcohol (that is, a polyvinyl alcohol structure in a graft polymer) with respect to 100 parts by mass of the chloroprene-based polymer. The content of the structure derived from a polyvinyl alcohol is, for example, 0.30, 0.50, 1.00, 1.50, 2.00, 2.50, 3.00, 3.50, 4.00, 4.50, or 5.00 parts by mass, and may be within a range between any two of the numerical values exemplified here.

The chloroprene-based latex composition according to one embodiment of the present invention may also contain a part of the added polyvinyl alcohol in a state not graft-copolymerized to the chloroprene-based polymer, that is, in a free state. The free polyvinyl alcohol will be described later.

By containing the above amounts of the monomer unit derived from chloroprene, the vinyl monomer containing a carboxyl group, and the structure derived from a polyvinyl alcohol, and further containing a part of the vinyl monomer containing a carboxyl group and a part of the polyvinyl alcohol in a free state, the chloroprene-based polymer according to one embodiment of the present invention becomes a chloroprene-based latex composition which is more excellent in storage stability and mechanical stability, and from which an adhesive excellent in adhesive properties such as initial peel strength, normal state peel strength, water resistance strength, and softening point can be obtained.

1.2 Vinyl Monomer Containing Carboxyl Group

The chloroprene-based latex composition according to one embodiment of the present invention may contain a part of the added vinyl monomer containing a carboxyl group in a state not included in the chloroprene-based polymer, that is, in a free state (monomer state).

The chloroprene-based latex composition according to one embodiment of the present invention can contain 0.01 to 5.00 parts by mass of the vinyl monomer containing a carboxyl group in a free state, with respect to 100 parts by mass of the monomer unit derived from chloroprene contained in the chloroprene-based latex composition. The content of

the vinyl monomer containing a carboxyl group is, for example, 0.01, 0.02, 0.05, 0.10, 0.20, 0.50, 1.00, 2.00, 3.00, 4.00, or 5.00 parts by mass, and may be within a range between any two of the numerical values exemplified here.

The chloroprene-based latex composition according to one embodiment of the present invention can contain 35 to 75 parts by mass of the added vinyl monomer containing a carboxyl group in a free state, with respect to 100 parts by mass of the vinyl monomer containing a carboxyl group. The vinyl monomer containing a carboxyl group in a free state is, for example, 35, 40, 45, 50, 55, 60, 65, 70, or 75 parts by mass, and may be within a range between any two of the numerical values exemplified here.

1.3 Polyvinyl Alcohol

The chloroprene-based latex composition according to the present invention can contain a part of the added polyvinyl alcohol in a state not included in the chloroprene-based polymer (graft polymer), that is, in a free state.

<Degree of Polymerization of Polyvinyl Alcohol>

It is preferable that the polyvinyl alcohol according to one embodiment of the present invention has a degree of polymerization of 250 to 1000. The degree of polymerization of the polyvinyl alcohol is, for example, 250, 300, 350, 400, 450, 500, 550, 600, 650, 700, 750, 800, 850, 900, 950, or 1000, and may be within a range between any two of the numerical values exemplified here.

<Degree of Saponification of Polyvinyl Alcohol>

It is preferable that the polyvinyl alcohol according to one embodiment of the present invention has a degree of saponification of 76 to 95 mol%. The degree of saponification is, for example, 76, 78, 80, 82, 84, 86, 88, 90, 91, 92, 93, 94, or 95 mol%, and may be within a range between any two of the numerical values exemplified here.

By setting the degree of polymerization and the degree of saponification of the polyvinyl alcohol within the above numerical ranges, it becomes easier to adjust a viscosity and a dispersibility of a polymerization solution in a polymerization step of the chloroprene-based polymer to appropriate ranges, and a stable polymerization can be performed.

In one embodiment of the present invention, the polyvinyl alcohol can include a polyvinyl alcohol L. The polyvinyl alcohol L according to one embodiment of the present invention can have a degree of polymerization of less than 450. The degree of polymerization of the polyvinyl alcohol L is, for example, 100, 125, 150, 175, 200, 225, 250, 275, 300, 325, 350, 375, 400, 410, 420, 430, 440, or 445, and may be within a range between any two of the numerical values exemplified here.

The polyvinyl alcohol L according to the present invention can have a degree of saponification of 76 to 90 mol%. The degree of saponification of the polyvinyl alcohol L is, for example, 76, 78, 80, 82, 84, 86, 88, or 90 mol%, and may be within a range between any two of the numerical values exemplified here.

The chloroprene-based latex composition according to one embodiment of the present invention, by using the polyvinyl alcohol L having a degree of polymerization of less than 450, can activate coalescence and redispersion of a colloid in an initial stage of polymerization, and becomes a chloroprene-based latex composition in which properties such as a particle size, a particle dispersion, and a viscosity are more controlled, and which is more excellent in storage stability.

Furthermore, according to one embodiment of the present invention, by using the polyvinyl alcohol L, it becomes a chloroprene-based latex composition which is more excellent in storage stability and mechanical stability, and from which an adhesive more excellent in adhesion properties such as initial peel strength, normal state peel strength, water resistance strength, and a softening point can be obtained.

The chloroprene-based latex composition according to one embodiment of the present invention may contain a polyvinyl alcohol other than the polyvinyl alcohol L.

In one embodiment of the present invention, it is preferable that a total amount of an amount of the polyvinyl alcohol (free polyvinyl alcohol) contained in the chloroprene-based latex composition and an amount of a structure derived from the polyvinyl alcohol contained in a graft polymer is 0.30 to 5.00 parts by mass, with respect to 100 parts by mass of the chloroprene-based latex composition. The total amount of the amount of the (free) polyvinyl alcohol contained in the chloroprene-based latex composition and the amount of the structure derived from the polyvinyl alcohol contained in the graft polymer is 0.30, 0.50, 1.00, 1.50, 2.00, 2.50, 3.00, 3.50, 4.00, 4.50, or 5.00 parts by mass, and may be within a range between any two of the numerical values exemplified here.

It is preferable that the chloroprene-based latex composition according to one embodiment of the present invention contains 0.30 to 5.00 parts by mass of the polyvinyl alcohol in a free state, which is not graft-copolymerized, with respect to 100 parts by mass of the chloroprene-based polymer. The content of the free polyvinyl alcohol is, for example, 0.30, 0.50, 1.00, 1.50, 2.00, 2.50, 3.00, 3.50, 4.00, 4.50, or 5.00 parts by mass, and may be within a range between any two of the numerical values exemplified here.

1.4 Chloroprene Dimer

The chloroprene-based latex composition according to the present invention comprises at least one chloroprene dimer selected from a group consisting of a chloroprene dimer (a) represented by formula (a), a chloroprene dimer (b) represented by formula (b), and a chloroprene dimer (c) represented by formula (c).

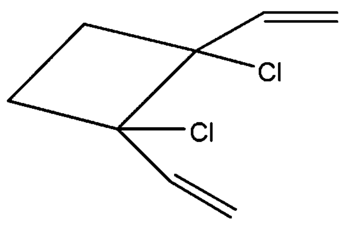

(a)

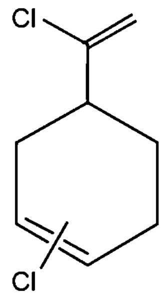

(b)

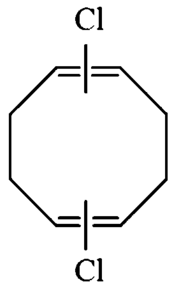

(c)

It is preferable that the chloroprene-based latex composition according to one embodiment of the present invention comprises the chloroprene dimer (b). It is preferable that the chloroprene-based latex composition according to one embodiment of the present invention comprises the chloroprene dimer (b) and the chloroprene dimer (a). Furthermore, the chloroprene-based latex composition according to one embodiment of the present invention can also comprise the chloroprene dimer (a), the chloroprene dimer (b), and the chloroprene dimer (c).

The chloroprene-based latex composition according to one embodiment of the present invention can also comprise a chloroprene dimer other than the chloroprene dimer (a), the chloroprene dimer (b), and the chloroprene dimer (c).

In the chloroprene-based latex composition according to the present invention, when it is made into the chloroprene-based latex composition having a solid content concentration of 50% by mass by adjusting an amount of water, a total content of the chloroprene dimer (a), the chloroprene dimer (b), and the chloroprene dimer (c) in the chloroprene-based latex composition having a solid content concentration of 50% by mass is 0.0400 to 0.1500 parts by mass with respect to 100 parts by mass of the chloroprene-based latex composition having a solid content concentration of 50% by mass. The total content of the chloroprene dimer (a), the chloroprene dimer (b), and the chloroprene dimer (c) is, for example, 0.0400, 0.0500, 0.0600, 0.0700, 0.0800, 0.0900, 0.1000, 0.1100, 0.1200, 0.1300, 0.1400, or 0.1500 parts by mass, and may be within a range between any two of the numerical values exemplified here.

The content of the chloroprene dimer (a), the chloroprene dimer (b), and the chloroprene dimer (c) in the chloroprene-based latex composition can be controlled by highly adjusting production conditions of the chloroprene-based latex composition, for example, a type, an amount, an addition timing, and a polymerization time of each component used in a polymerization step. The chloroprene-based latex composition according to the present invention becomes a chloroprene-based latex composition that has little odor and is excellent in storage stability and mechanical stability by setting the content of the chloroprene dimer (a), the chloroprene dimer (b), and the chloroprene dimer (c) within the above numerical range. The content of each chloroprene dimer in the chloroprene-based latex composition can be measured by

the method described in the Examples.

In the chloroprene-based latex composition according to one embodiment of the present invention, a content of the chloroprene dimer (a) can be 0.0050 to 0.0500 parts by mass with respect to 100 parts by mass of the chloroprene-based latex composition having a solid content concentration of 50% by mass, in the chloroprene-based latex composition having a solid content concentration of 50% by mass. The content of the chloroprene dimer (a) is, for example, 0.0050, 0.0100, 0.0150, 0.0200, 0.0250, 0.0300, 0.0350, 0.0400, 0.0450, or 0.0500 parts by mass, and may be within a range between any two of the numerical values exemplified here.

In the chloroprene-based latex composition according to one embodiment of the present invention, a content of the chloroprene dimer (b) can be 0.0100 to 0.1000 parts by mass with respect to 100 parts by mass of the chloroprene-based latex composition having a solid content concentration of 50% by mass, in the chloroprene-based latex composition having a solid content concentration of 50% by mass. The content of the chloroprene dimer (b) is, for example, 0.0100, 0.0150, 0.0200, 0.0250, 0.0300, 0.0350, 0.0400, 0.0450, 0.0500, 0.0600, 0.0700, 0.0800, 0.0900, or 0.1000 parts by mass, and may be within a range between any two of the numerical values exemplified here.

In the chloroprene-based latex composition according to one embodiment of the present invention, a content of the chloroprene dimer (c) can be 0 to 0.0500 parts by mass with respect to 100 parts by mass of the chloroprene-based latex composition having a solid content concentration of 50% by mass, in the chloroprene-based latex composition having a solid content concentration of 50% by mass. The content of the chloroprene dimer (c) is, for example, 0, 0.0010, 0.0050, 0.0100, 0.0150, 0.0200, 0.0250, 0.0300, 0.0350, 0.0400, 0.0450, or 0.0500 parts by mass, and may be within a range between any two of the numerical values exemplified here.

1.5. Surfactant

The chloroprene-based latex composition according to one embodiment of the present invention may contain a surfactant. The chloroprene-based latex composition according to one embodiment of the present invention can contain a surfactant having an HLB value of 3 to 10.

The HLB value of the surfactant is, for example, 3, 4, 5, 6, 7, 8, 9, or 10, and may be within a range between any two of the numerical values exemplified here. In the present invention, an HLB (Hydrophile-Lipophile Balance) value means an HLB value according to Davies' theory and is represented by the following formula.

$$\text{HLB value} = \Sigma(\text{group number of hydrophilic group}) - \Sigma(\text{group number of lipophilic group}) + 7$$

The chloroprene-based latex composition according to one embodiment of the present invention can contain 0 to 0.36 parts by mass of the surfactant with respect to 100 parts by mass of the chloroprene-based latex composition. The content of the surfactant is, for example, 0, 0.04, 0.06, 0.08, 0.10, 0.15, 0.20, 0.25, 0.30, 0.32, 0.34, or 0.36 parts by mass, and may be within a range between any two of the numerical values exemplified here.

The surfactant is not particularly limited, and a known anionic, nonionic, or cationic surfactant can be used, but it is preferable to include a nonionic surfactant. It is preferable that the nonionic surfactant includes at least one of a fatty acid alkanolamide and a fatty acid ester. Specifically, the examples may include a sorbitan fatty acid ester such as sorbitan monostearate, sorbitan monolaurate, and sorbitan monopalmitate; a fatty acid ester of glycerol such as glycerol monostearate; and a fatty acid alkanolamide such as lauric acid diethanolamide, myristic acid diethanolamide, and palmitic acid diethanolamide, and the like. These may be used alone, or two or more thereof may be used in combination.

The amount of each component described above, such as the amount of the monomer unit derived from the chloroprene monomer, the amount of the monomer unit derived from the vinyl monomer containing a carboxyl group, the amount of the structure derived from the polyvinyl alcohol, the amount of the free vinyl monomer containing a carboxyl group, and the amount of the free polyvinyl alcohol, contained in the chloroprene-based latex composition, can be controlled by adjusting the production conditions during the production of the chloroprene-based latex composition, specifically, the charged amount of each raw material, the polymerization conditions, and the like. Furthermore, each content can be calculated from an analysis value and a charged amount by the method described in the Examples.

1.5. Physical Properties of Chloroprene-based Latex Composition

<Storage stability>

In the chloroprene-based latex composition according to one embodiment of the present invention, when 235 g of the chloroprene-based latex composition is placed in a glass container with a body diameter of 19.5 cm and a volume of 225 ml and stored at 40°C, it is preferable that a period until a precipitate of 2 mm or more is formed on a bottom of the container, or a coagulum remaining on a wire mesh, which is a coagulum dried at 125°C for 1 hour, becomes 0.005% or

more with respect to a solid content of the chloroprene-based latex composition, is 6 weeks or more, and more preferably 8 weeks or more. The storage stability can be specifically evaluated by the method described in the Examples.

<Mechanical Stability>

It is preferable that the chloroprene-based latex composition according to one embodiment of the present invention has a mechanical stability of 0.100% or less. The mechanical stability is, for example, 0.010, 0.020, 0.030, 0.040, 0.050, 0.060, 0.070, 0.080, 0.090, or 0.100%, and may be within a range between any two of the numerical values exemplified here. The mechanical stability can be evaluated by the method described in the Examples.

The storage stability and the mechanical stability of the chloroprene-based latex composition according to the present invention can be adjusted by appropriately controlling a polymerization step, for example, by adjusting a type, an amount, an addition timing, and a polymerization time of each component used in the polymerization step, and appropriately controlling a particle size and a viscosity in a polymerization solution.

It is preferable that the chloroprene-based latex composition according to one embodiment of the present invention has little odor, particularly little pungent odor. Specifically, it is preferable that when 100 mL of the chloroprene-based latex composition is placed in a 250 mL polyethylene bottle, sealed by closing a lid, and stored at 40°C for 24 hours, and then the lid is opened and an olfactory measurement of a headspace gas is performed by an olfactory panelist, there is no pungent odor, or there is a slight pungent odor, and there is no strong pungent odor or intense pungent odor.

The odor of the chloroprene-based latex composition can be controlled by adjusting a type and an amount of a chloroprene dimer contained in the chloroprene-based latex composition.

2. Method for Producing Chloroprene-based Latex Composition

A method for producing the chloroprene-based latex composition according to the present invention is not particularly limited, but it can be produced, for example, by the following method. The method for producing the chloroprene-based latex composition according to the present invention comprises a polymerization step of polymerizing a raw material monomer comprising a chloroprene monomer until a final polymerization conversion rate is reached. Furthermore, the polymerization step includes a raw material monomer divided addition step. In the polymerization step, an initial addition rate of the raw material monomer at a start of polymerization is 10.0 to 70.0% by mass with respect to 100% by mass of a total amount of the raw material monomer used for the polymerization, in the raw material monomer divided addition step, a remaining raw material monomer is added in divided portions after the start of polymerization, the divided addition is started before 25% by mass of the raw material monomer used for the polymerization is converted, and the divided addition is performed over a period of 20 or more, when a polymerization time from the start of polymerization to reaching the final polymerization conversion rate is 100.

2.1. Polymerization Step

In the polymerization step according to the present invention, a raw material monomer comprising a chloroprene monomer is polymerized until a final polymerization conversion rate is reached. The raw material monomer according to the present invention comprises a chloroprene monomer, and may comprise the chloroprene monomer and a vinyl monomer containing a carboxyl group. Furthermore, the raw material monomer according to the present invention can further comprise another monomer other than chloroprene and the vinyl monomer containing a carboxyl group. As the other monomer, the monomers listed above can be mentioned.

<Raw Material Monomer >

(Initial Addition)

The polymerization step according to one embodiment of the present invention can include an initial addition step of charging at least a part of the raw material monomer used in the polymerization step into a polymerization vessel before a start of polymerization, and particularly can include an initial addition step of charging at least a part of chloroprene into the polymerization vessel. An initial addition rate of the raw material monomer at the start of polymerization is 10.0 to 70.0% by mass with respect to 100% by mass of the raw material monomer used for the polymerization. Furthermore, it is particularly preferable that an initial addition rate of the chloroprene monomer at the start of polymerization is 10.0 to 70.0% by mass with respect to 100% by mass of the chloroprene monomer used as a raw material. The initial addition rate of the raw material monomer, particularly the chloroprene monomer, at the start of polymerization is, for example, 10.0, 15.0, 20.0, 25.0, 30.0, 35.0, 40.0, 45.0, 50.0, 55.0, 65.0, or 70.0% by mass, and may be within a range between any two of the numerical values exemplified here.

In the polymerization step according to one embodiment of the present invention, it is also possible to charge a part of another monomer other than chloroprene used in the polymerization step into the polymerization vessel before the start of polymerization, and to add a part of the other monomer other than chloroprene used in the polymerization step after the start of polymerization. As one example, in one embodiment of the present invention, it is possible to charge all of the other monomer other than chloroprene used in the polymerization step into the polymerization vessel before the start of polymerization, and it is possible to charge all of the vinyl monomer containing a carboxyl group used in the polymerization step into the polymerization vessel before the start of polymerization.

It is preferable to adjust an addition amount of the vinyl monomer containing a carboxyl group so that a resulting chloroprene-based polymer has the composition described above, and an amount of the free vinyl monomer containing a carboxyl group in a resulting chloroprene-based latex composition falls within the range described above. Specifically, it is preferable to add 1.0 to 5.0 parts by mass with respect to 100 parts by mass of the raw material monomer used in the polymerization step. The addition amount of the vinyl monomer containing a carboxyl group is, for example, 1.0, 2.0, 3.0, 4.0, or 5.0 parts by mass, and may be within a range between any two of the numerical values exemplified here.

(Divided Addition)

The polymerization step according to the present invention includes a raw material monomer divided addition step. In the raw material monomer divided addition step, a remaining raw material monomer, particularly chloroprene, is added in divided portions after a start of polymerization. In the raw material monomer divided addition step, a monomer other than chloroprene may be further added in divided portions after the start of polymerization. The divided addition means adding the remaining raw material monomer, particularly chloroprene, in two or more portions. A number of times of the divided addition can be two or more times, is preferably five or more times, and more preferably 10 or more times. The divided addition includes a continuous addition of adding the remaining raw material monomer, particularly chloroprene, at a constant flow rate, and it is preferable that the divided addition is the continuous addition.

The divided addition is started before 25% by mass of the raw material monomer used for the polymerization is converted. That is, the divided addition is started at a time when a polymerization conversion rate is less than 25%, with respect to 100% by mass of the raw material monomer used for the polymerization. The polymerization conversion rate (% by mass) can be determined by the following formula.

$$[(\text{mass of polymer}/\text{total mass of monomer used for polymerization}) \times 100]$$

Hereinafter, the polymerization conversion rate may also be simply referred to as a conversion rate. The divided addition can be started when the conversion rate becomes 0% by mass or more and less than 25%. The conversion rate at the start of the divided addition is, for example, 0, 1, 2, 3, 4, 5, 6, 7, 8, 9, 10, 11, 12, 13, 14, 15, 16, 17, 18, 19, 20, 21, 22, 23, or 24% by mass, and may be within a range between any two of the numerical values exemplified here. Furthermore, it is preferable that the divided addition is started before all of the raw material monomer in a polymerization system, particularly chloroprene, is consumed.

In the production method of the present invention, the divided addition is performed over a period of 20 or more, when a polymerization time from a start of polymerization to reaching a final polymerization conversion rate is 100. Here, the divided addition can be considered to start with a first divided addition added after the start of polymerization, and to end with a last divided addition at which all monomers have been added. The divided addition can be 20 to 70 when the polymerization time is 100, and is, for example, 20, 25, 30, 35, 40, 45, 50, 55, 60, 65, or 70, and may be within a range between any two of the numerical values exemplified here.

According to the production method of the present invention, it is presumed that by initially adding a specific portion of the chloroprene monomer used for polymerization, and adding the remainder in divided portions at a specific timing over a specific period of time, a type and an amount of a chloroprene dimer to be generated can be controlled, and a particle size and a viscosity in a polymerization solution can be appropriately controlled, whereby a chloroprene-based latex composition having little odor and being excellent in storage stability and mechanical stability can be obtained.

< Emulsifier>

In the polymerization step according to the present invention, at least one of a polyvinyl alcohol and a surfactant can be added. The polyvinyl alcohol and the surfactant function as an emulsifier. As the polyvinyl alcohol and the surfactant, the polyvinyl alcohol and the surfactant of the embodiments described above are preferable.

It is preferable to adjust an addition amount of the polyvinyl alcohol so that a resulting chloroprene-based polymer has the composition described above, and an amount of a free polyvinyl alcohol in a resulting chloroprene-based latex composition falls within the range described above. Specifically, the addition amount of the polyvinyl alcohol is preferable

to add 1.0 to 5.0 parts by mass with respect to 100 parts by mass of the raw material monomer used in the polymerization step. The addition amount of the polyvinyl alcohol is, for example, 1.0, 2.0, 3.0, 4.0, or 5.0 parts by mass, and may be within a range between any two of the numerical values exemplified here.

In the polymerization step according to one embodiment of the present invention, a surfactant may be further added.

The addition amount of the surfactant can be 0 to 0.60 parts by mass with respect to 100 parts by mass of the raw material monomer used in the polymerization step. The addition amount of the surfactant is, for example, 0, 0.15, 0.20, 0.25, 0.30, 0.35, 0.40, 0.45, 0.50, 0.55, or 0.60 parts by mass, and may be within a range between any two of the numerical values exemplified here.

In the polymerization step according to one embodiment of the present invention, all of the emulsifier used in the polymerization step can be charged into the polymerization vessel before the start of polymerization. Furthermore, in the polymerization step according to one embodiment of the present invention, at least a part of the emulsifier used in the polymerization step can also be added in divided portions after the start of polymerization.

<pH Adjusting Agent>

In the polymerization step according to one embodiment of the present invention, a pH adjusting agent can be added. Examples of the pH adjusting agent include potassium hydroxide, sodium hydroxide, diethanolamine, diisopropanolamine, and triisopropanolamine. Two or more of these may be used in combination.

<Reducing Agent>

In the polymerization step according to one embodiment of the present invention, a reducing agent can be added. Examples of the reducing agent include potassium metabisulfite, potassium sulfite, potassium bisulfite, potassium phosphate, potassium hydrogen phosphate, sodium bisulfite, and sodium sulfite. The addition amount of the reducing agent can be 0.01 to 3.0 parts by mass with respect to 100 parts by mass of the raw material monomer used in the polymerization step.

In the polymerization step according to one embodiment of the present invention, a polymerization initiator can be used. As the polymerization initiator, inorganic peroxides such as potassium persulfate, ammonium persulfate, and sodium persulfate; and organic peroxides such as benzoyl peroxide can be used. These polymerization initiators can be used alone or in combination of two or more. The amount of the polymerization initiator used is preferably 0.01 to 10 parts by mass with respect to 100 parts by mass of the raw material monomer used in the polymerization step.

<Chain Transfer Agent>

In the polymerization step according to one embodiment of the present invention, a chain transfer agent can be used. The chain transfer agent is not particularly limited, and for example, a long-chain alkyl mercaptan such as n-dodecyl mercaptan, tert-dodecyl mercaptan, and n-octyl mercaptan; a dialkyl xanthogen disulfide such as diisopropyl xanthogen disulfide or diethyl xanthogen disulfide; a known chain transfer agent such as iodoform can be used. These may be used alone, or two or more thereof may be used in combination.

An addition amount of the chain transfer agent can be 0.001 to 10 parts by mass with respect to 100 parts by mass of the raw material monomer used in the polymerization step.

In the polymerization step according to one embodiment of the present invention, all of the chain transfer agent used in the polymerization step can be charged into a polymerization vessel before a start of polymerization. Furthermore, in the polymerization step according to one embodiment of the present invention, a part of the chain transfer agent used in the polymerization step can be charged into the polymerization vessel before the start of polymerization, and at least a part of the chain transfer agent can also be added after the start of polymerization. As one example, a divided addition of the chain transfer agent can be started simultaneously with a divided addition of the monomer.

When at least a part of the chain transfer agent is added before the start of polymerization and the remaining chain transfer agent is added after the start of polymerization, the remaining chain transfer agent can be added in one portion or in divided portions in a plurality of times, and can also be continuously added at a constant flow rate. As one example, the divided addition of the chain transfer agent can be a continuous addition, and can be performed over the same period of time as the divided addition of the chloroprene monomer.

When at least a part of the chain transfer agent is added after the start of polymerization, 70 parts by mass or less of 100 parts by mass of the chain transfer agent used in the polymerization step can be added after the start of polymerization. In this case, the amount of the chain transfer agent added after the start of polymerization can be, for example, 0, 5, 10, 15, 20, 25, 30, 35, 40, 45, 50, 55, 60, 65, or 70 parts by mass, and may be within a range between any two of the numerical values exemplified here.

<Polymerization Temperature>

A polymerization temperature is preferably in a range of 0 to 55°C from a viewpoint of easy control of a reaction. From a viewpoint of performing a polymerization reaction more smoothly and safely, it is preferably that a lower limit value of the polymerization temperature is 10°C or higher and an upper limit value is 55°C or lower.

<Final Polymerization Conversion Rate>

In the polymerization step according to the present invention, after a desired polymerization conversion rate is reached, a polymerization reaction can be stopped by adding a polymerization terminator, and a conversion rate at an end of polymerization is taken as a final polymerization conversion rate. The final polymerization conversion rate can be in a range of 50 to 99.9% by mass. The final polymerization conversion rate is, for example, 50, 60, 70, 80, 85, 90, 91, 92, 93, 94, 95, 96, 97, 98, 99, 99.5, or 99.9% by mass, and may be within a range between any two of the numerical values exemplified here.

<Polymerization Terminator>

As the polymerization terminator, for example, there are diethylhydroxylamine, thiodiphenylamine, 4-tert-butylcatechol, 2,2'-methylenebis(4-ethyl-6-tertbutylphenol), and the like. An addition amount can be 0.02 to 0.1 parts by mass with respect to 100 parts by mass of all monomers used in the polymerization step.

2.2. Unreacted Monomer Removal Step

The production method according to one embodiment of the present invention can include an unreacted monomer removal step. In the unreacted monomer removal step, an unreacted monomer after an end of polymerization can be removed from a polymerization solution after the end of polymerization by a method such as a conventional steam stripping method or a vacuum heating evaporation method to obtain a chloroprene-based latex composition.

A solid content concentration of the chloroprene-based latex composition in the polymerization solution at the end of polymerization can be, for example, 20, 25, 30, 35, 40, 45, 50, 55, or 60% by mass, and may be within a range between any two of the numerical values exemplified here.

3. Adhesive (Aqueous Adhesive)

The adhesive according to one embodiment of the present invention comprises the above-mentioned chloroprene-based latex composition. Furthermore, the adhesive can be an aqueous adhesive. The adhesive according to one embodiment of the present invention can comprise the above-mentioned chloroprene-based latex composition, a tackifier resin, and a metal oxide.

<Tackifier Resin>

As the tackifier resin, a rosin resin, a polymerized rosin resin, an α-pinene resin, a β-pinene resin, a terpene phenol resin, a C5 fraction petroleum resin, a C9 fraction petroleum resin, a C5/C9 fraction petroleum resin, a DCPD-based petroleum resin, an alkylphenol resin, a xylene resin, a coumarone resin, a coumarone-indene resin, and the like can be mentioned. These can be used alone as one type or in combination of two or more types.

An addition method of the tackifier resin is not particularly limited, but in order to uniformly disperse the resin in an adhesive, it is preferable to add it as an aqueous emulsion. To make the tackifier resin an aqueous emulsion, there are a method of emulsifying and dispersing a solution thereof in an organic solvent such as toluene in water using an emulsifier, and then removing the organic solvent by heating under reduced pressure, and a method of pulverizing it into fine particles and emulsifying and dispersing it, and the like.

An addition amount (in terms of solid content) of the tackifier resin can be 10 to 50 parts by mass with respect to 100 parts by mass of the adhesive. The addition amount (in terms of solid content) of the tackifier resin is, for example, 10, 15, 20, 25, 30, 35, 40, 45, or 50 parts by mass, and may be within a range between any two of the numerical values exemplified here.

<Metal Oxide>

As the metal oxide, zinc oxide, titanium oxide, iron oxide, and the like can be mentioned. These can be used alone as one type or in combination of two or more types.

An addition amount (in terms of solid content) of the metal oxide can be 0.1 to 5.0 parts by mass with respect to 100 parts by mass of the adhesive. The addition amount (in terms of solid content) of the metal oxide is, for example, 0.1, 0.2, 0.5, 1.0, 2.0, 3.0, 4.0, or 5.0 parts by mass, and may be within a range between any two of the numerical values exemplified here.

The adhesive according to one embodiment of the present invention can appropriately contain, in addition to the above-mentioned components, a pH adjusting agent, a plasticizer, a filler, an antioxidant, a pigment, a colorant, a wetting agent, an antifoaming agent, a thickener, another resin emulsion (latex), and the like.

The adhesive prepared using the chloroprene-based latex composition of the present invention can be used for adhering the same type of adherend or different types of adherends such as paper, wood, cloth, leather, rubber, plastic, plastic foam, pottery, glass, ceramic, and metal.

The chloroprene-based latex composition according to one embodiment of the present invention can be prepared, As one example, by the following method.

<Production of Adhesive>

To 100 parts by mass (in terms of solid content) of a chloroprene-based latex composition, 50 parts by mass of a tackifier resin (Tamanol E-100 manufactured by Arakawa Chemical Industries, Ltd.) and 1 part by mass of a metal oxide (zinc oxide: AZ-SW manufactured by Osaki Industry Co., Ltd.) are added, and the mixture is stirred using a Three-One Motor. A thickener (RM-8W manufactured by Rohm and Haas Company) is added to obtain an adhesive, such that the viscosity of this solution becomes 3000 to 4000 mPa·s at 25°C and at 30 rpm.

It is preferable that the adhesive according to the present invention has the following properties for an adhesion sample prepared as follows.

<Production of Adhesion Sample >

The obtained adhesive is applied with a brush to two sheets of a canvas (25 × 150 mm) so as to be 300 g (solid content)/$m^2$, respectively, dried in an 80°C atmosphere for 9 minutes, left at room temperature for 1 minute, and then the applied surfaces are bonded together and pressure-bonded with a hand roller to obtain an adhesion sample. The following evaluations are performed on the obtained adhesion sample.

<Initial Peel Strength>

It is preferable that the aqueous adhesive according to one embodiment of the present invention has an initial peel strength of 3.0 N/mm or more in a T-peel test (initial peel strength) measured using a tensile tester at a tensile speed of 200 mm/min when the adhesion sample is left at room temperature for 10 minutes after roller pressure bonding. The initial peel strength is, for example, 3.0, 3.5, 4.0, 4.5, 5.0, 5.5, or 6.0 N/mm, and may be within a range between any two of the numerical values exemplified here.

<Normal State Peel Strength>

It is preferable that the aqueous adhesive according to one embodiment of the present invention has a normal state peel strength of 4.0 N/mm or more in a T-peel test (normal state peel strength) measured using a tensile tester at a tensile speed of 200 mm/min after the adhesion sample is left at room temperature for 5 days. The normal state peel strength is, for example, 4.0, 4.5, 5.0, 5.1, 5.2, 5.3, 5.4, 5.5, 5.6, 5.7, 5.8, 5.9, or 6.0 N/mm, and may be within a range between any two of the numerical values exemplified here.

<Water Resistance Strength>

It is preferable that the aqueous adhesive according to one embodiment of the present invention has a water resistance strength of 2.2 N/mm or more in a T-peel test (water resistance strength test) measured using a tensile tester at a tensile speed of 200 mm/min after the adhesion sample is left at room temperature for 5 days and further immersed in water at 23°C for 2 days. The water resistance-strength is, for example, 2.2, 2.4, 2.6, 2.8, 3.0, 3.2, 3.4, 3.6, 3.8, or 4.0 N/mm, and may be within a range between any two of the numerical values exemplified here.

<Softening Point>

The aqueous adhesive according to one embodiment of the present invention can have a softening point of 40 to 80°C, when the obtained adhesive is applied with a brush to a thickness of 0.5 mm on each of the two sheets of a canvas (25

× 150 mm) and bonded together, a temperature at which peeling occurs is taken as a softening point while a load of 500 g is applied using a T-peel test and a temperature is raised at 2°C/5 minutes. The softening point is, for example, 40, 45, 50, 55, 60, 65, 70, 75, or 80°C, and may be within a range between any two of the numerical values exemplified here.

It is preferable that the chloroprene-based latex composition according to one embodiment of the present invention has the above-mentioned properties when it is made into an adhesive of the above-mentioned formulation, specifically, the formulation described in the Examples.

EXAMPLES

Hereinafter, the present invention will be described in more detail based on examples, but the present invention is not to be construed as being limited thereto.

<Production of Chloroprene-based Latex Composition>

(Example 1)

Into a 10-liter internal volume reactor, 94 parts by mass of water, 1.8 parts by mass of polyvinyl alcohol (a), 1.3 parts by mass of polyvinyl alcohol (b), and 0.8 parts by mass of polyvinyl alcohol (c) were charged under a nitrogen stream and dissolved. While stirring the obtained mixture, 29.1 parts by mass of chloroprene, 3.0 parts by mass of methacrylic acid, and 0.09 parts by mass of octyl mercaptan were further added, and the mixture was stirred at 30°C for 10 minutes (initial addition, hereinafter also referred to as "initial charge"). 0.1 parts by mass of sodium sulfite was added as a reducing agent, and polymerization was initiated at 35°C under a nitrogen atmosphere using potassium persulfate as an initiator. At the start of polymerization, that is, from the point when the polymerization rate was 0% with respect to all monomers used, a divided addition step was started. 67.9 parts by mass of chloroprene and 0.21 parts by mass of octyl mercaptan were continuously added at a rate of 13.4 g/min over 4.5 hours (continuous addition, hereinafter also referred to as "continuous feed"). Subsequently, when the conversion rate reached 98.1%, an emulsion of phenothiazine was added to stop the polymerization. After adjusting the pH of the polymerization solution to 7.2 with a 45% aqueous diethanolamine solution, unreacted monomers were removed under reduced pressure to obtain a chloroprene-based latex composition. Water was then added to adjust the solid content of the composition to 50% by mass.

(Examples 2 to 6, Comparative Examples 1 to 5)

Chloroprene-based latex compositions with a solid content concentration of 50% by mass were produced in the same manner as in Example 1, except that the polymerization formulation and polymerization conditions were as described in Table 2.

The degrees of polymerization and degrees of saponification for polyvinyl alcohol (a), polyvinyl alcohol (b), and polyvinyl alcohol (c) are shown below.

Polyvinyl alcohol (a): Degree of polymerization 300, Degree of saponification 88.0
Polyvinyl alcohol (b): Degree of polymerization 300, Degree of saponification 80.0
Polyvinyl alcohol (c): Degree of polymerization 500, Degree of saponification 87.8

<Evaluation of Chloroprene-based Latex Composition>

(Amount of Chloroprene Dimer in 100 parts by mass of Chloroprene-based Latex Composition)

The amount of chloroprene dimers in the obtained chloroprene-based latex composition, which had a solid content concentration of 50% by mass, was calculated using the following method.

First, 20 mL of acetone and 0.05 mL of acetic acid were added to a 30 mL screw-cap vial. The vial was capped, and the mass of the vial and its contents was weighed. Next, approximately 2 g of the chloroprene-based latex composition was added dropwise into the vial, and the total mass was accurately reweighed to determine the precise mass of the added latex. The vial was then shaken and stirred for 1 hour to extract the chloroprene dimers into the acetone. Finally, 5 mL of a 100 mg/L acetone solution of chlorobenzene (the internal standard) was added. The amount of chloroprene dimers was then quantified by Gas Chromatography (GC) through comparison with the internal standard.

GC Conditions
Apparatus: GC-MS
Column: DB-WAX, 60 m × 0.25 mm (film thickness: 0.25 μm)

Column Temperature Program:

Hold at 50°C for 10 min
Ramp up by 5°C/min to 150°C
Hold at 150°C for 20 min
Ramp up by 30°C/min to 220°C
Hold at 220°C for 60 min

Inlet Temperature: 170°C
Detector Temperature: 250°C (FID)
Sample Injection Volume: 2 μL (via autosampler)

The detection sensitivity ratio of the chloroprene dimers to the internal standard (chlorobenzene) was set to 1/0.82. The content of each chloroprene dimer was calculated by the following formula, and the measurement was performed with n=3.

Content of chloroprene dimer [% by mass] = (peak area of chloroprene dimer)/(peak area of internal standard)/relative sensitivity × amount of internal standard added/(sample mass [mg]) × 100

Relative sensitivity: 0.82

(Amount of Each Component in 100 parts by mass of Chloroprene-based Latex Composition)

The composition of each component shown below was calculated from the charged amounts and analysis values.

- Amount of polyvinyl alcohol structure (including free polyvinyl alcohol) with respect to 100 parts by mass of the chloroprene-based latex composition
- Amount of polyvinyl alcohol structure in the graft polymer (in the chloroprene-based polymer) with respect to 100 parts by mass of the chloroprene-based polymer
- Amount of free polyvinyl alcohol with respect to 100 parts by mass of the chloroprene-based polymer
- Amount of vinyl monomer containing a carboxyl group in the chloroprene-based polymer with respect to 100 parts by mass of monomer units derived from chloroprene in the chloroprene-based polymer
- Amount of free monomer units of the vinyl monomer containing a carboxyl group with respect to 100 parts by mass of monomer units derived from chloroprene in the chloroprene-based polymer

The results are shown in Tables 1 and 2.

(Amount of Polyvinyl Alcohol Structure in Graft Polymer)

The amount of the polyvinyl alcohol structure in the graft polymer was calculated by the following method.
First, the amount of free polyvinyl alcohol that was not graft-copolymerized was quantified by the following method, and the amount of the polyvinyl alcohol structure in the graft polymer was determined by subtracting the amount of free polyvinyl alcohol from the charged amount of polyvinyl alcohol.

Preparation of Reagents

4 g of boric acid was dissolved in 96 mL of pure water to prepare a 4% boric acid aqueous solution.
2.5 g of potassium iodide was dissolved in about 70 mL of pure water to prepare a potassium iodide aqueous solution. 1.27 g of iodine was weighed, dissolved in the previously prepared potassium iodide aqueous solution, and pure water was added until the total volume became 100 mL to prepare an iodine solution.

Preparation of PVA Standard Solution

0.1 g of PVA was accurately weighed into a 100 mL volumetric flask, 50 to 60 mL of pure water was added, and it was dissolved in a water bath (about 95°C). After cooling to room temperature, pure water was added up to the mark line and mixed well. 10 mL was taken from this solution, placed in a 100 mL volumetric flask, pure water was added up to the mark line and mixed well to prepare a standard solution with a PVA concentration of 0.1 mg/mL.

Creation of Calibration Curve

1, 5, 10, 15, and 20 mL of the above standard solution were taken into 50 mL volumetric flasks, 15 mL of the 4% boric acid aqueous solution was added to each, and pure water was added until the total volume became 45 mL. Furthermore, 3 mL of the iodine solution was added to each, pure water was added up to the mark line and mixed well to prepare solutions with PVA concentrations of 2, 10, 20, 30, and 40 mg/L. Using a blank solution prepared without adding iodine as a control, the absorbance was measured with a spectrophotometer at a wavelength of 650 nm and a cell glass of 10 mm to create a concentration-absorbance calibration curve.

Preparation of Measurement Sample

9 g of the chloroprene-based latex composition from each Example and Comparative Example was weighed into a 200 mL beaker, 171 g of pure water was added while stirring, and it was diluted 20-fold by mass ratio. 100 g (50 g × 2) of the above diluted solution was taken into cells and subjected to centrifugation under the conditions of 6000 rpm × 30 minutes. 1 mL of the above supernatant was taken into a 50 mL volumetric flask, 15 mL of the 4% boric acid aqueous solution was added, and pure water was added until the total volume became 45 mL. Furthermore, 3 mL of the iodine solution was added, pure water was added up to the mark line and mixed well to prepare a measurement sample.

Measurement of Absorbance

Using the blank solution as a control, the absorbance was measured with a spectrophotometer at a wavelength of 650 nm and a cell glass of 10 mm. The measurement was effectively carried out by diluting the original chloroprene-based latex composition 1000-fold (a 20-fold dilution followed by a 50-fold dilution).

Calculation of PVA Concentration, Amount of Free Polyvinyl Alcohol, and Amount of Polyvinyl Alcohol Structure in Graft Polymer

The PVA concentration Sc of the measurement sample was calculated by the following formula.

$$Sc = ABS \times A$$

Sc: PVA concentration in the volumetric flask [mg/L], ABS: absorbance, A: coefficient (calculated from the calibration curve using Lotus 1-2-3)

Subsequently, the free polyvinyl alcohol concentration in the chloroprene-based latex composition was calculated by the following formula.

$$Lc = Sc \times C/B$$

Lc: Free polyvinyl alcohol concentration in the chloroprene-based latex composition [g/kg], B: Amount of diluted solution [g], C: Amount of supernatant [g]

Finally, the amount of free polyvinyl alcohol and the amount of the polyvinyl alcohol structure in the graft polymer in the chloroprene-based latex composition were calculated by the following formulas.

$$PVA_F = Lc \times LQ$$

$PVA_F$: Amount of free polyvinyl alcohol [g]
LQ: Amount of chloroprene-based latex composition [kg]

$$PVA_G = PVA_Q - PVA_F$$

$PVA_G$: Amount of polyvinyl alcohol structure in the graft polymer [g]
$PVA_Q$: Charged amount of polyvinyl alcohol [g]

The obtained $PVA_G$ was divided by the amount of the chloroprene-based polymer in the chloroprene-based latex composition to calculate the amount of the polyvinyl alcohol structure in the graft polymer with respect to 100 parts by mass of the chloroprene-based polymer. The "Amount of chloroprene-based polymer" was taken as the sum of the amount of chloroprene monomer units, the amount of vinyl monomer units containing a carboxyl group (excluding the free vinyl

monomer containing a carboxyl group), and the amount of the polyvinyl alcohol structure (excluding the free polyvinyl alcohol) in the chloroprene-based latex composition.

(Copolymerization Amount of Carboxyl Group-Containing Vinyl Monomer)

The chloroprene-based polymers according to the Examples and Comparative Examples have a high gel content and cannot be dissolved in the measurement solvent in $^1$H-NMR measurement used for measuring the methacrylic acid copolymerization amount. Therefore, a ratio of a peak area of methacrylic acid to a peak area of chloroprene was calculated by Py-GC/MS (SIM method), and the methacrylic acid copolymerization amount was calculated using a calibration curve (the ratio of the peak area of methacrylic acid to the peak area of chloroprene by $^1$H-NMR (MAA copolymerization amount) vs. methacrylic acid/chloroprene peak area ratio by Py-GC/MS (SIM method)) created for standard samples with different methacrylic acid copolymerization amounts (which have no gel content and can be measured by $^1$H-NMR).

Preparation of Sample for Py-GC/MS (SIM method)

The sample was freeze-dried and extracted with an ethanol-toluene azeotropic mixture (ETA). The extraction residue after drying was measured by Py-GC/MS (SIM method).

Py-GC/MS (SIM method)

Using methacrylic acid: m/z = 86, and chloroprene: m/z = 91, the methacrylic acid/chloroprene peak area ratio was calculated under the following measurement conditions.

| | |
|---|---|
| Apparatus: | Jms-Q1050GC manufactured by JEOL Ltd. |
| GC | Column: DB-WAX 60m*0.25mm (0.5μm) |
| | Column Temperature: 100°C (0 min) → 10°C/min → 240°C (11 min) |
| | Inlet Temperature: 240°C |
| | Carrier: He 1.0 mL/min (Split 1:30) |
| MS | Interface Temperature: 240°C |
| | Ion Source Temperature: 250°C |
| | Ionization Current: 50 μA |
| | Ionization Voltage: 70 eV |
| | Detector Voltage: -1200 V |
| | Ionization Method: EI SIM (m/z: 86, 91) |
| Py | PY-3030D manufactured by Frontier Laboratories Ltd. |
| | Pyrolysis Temperature: 590°C |
| | Sample Amount: 0.1 mg |
| | Interface Temperature: 300°C |

Preparation of Sample for $^1$H-NMR Measurement

A sample was obtained by purifying the chloroprene-based latex composition using methanol and xylene. About 30 mg of the sample was dissolved in about 1 mL of deuterated chloroform, and the measurement was performed.

$^1$H-NMR

Apparatus Configuration: Solution NMR (using 5 mm probe)
Measurement Conditions:

Analytical Instrument: Superconducting Nuclear Magnetic Resonance Spectrometer, ECX-400 manufactured by JEOL Ltd.
Observed Nucleus: $^1$H

Measurement Condition: Single Pulse
Sample Spinning Rate: 12 Hz
Measurement Temperature: 30°C
Pulse Width: 3.5 μsec (45° pulse)
Repetition Time: 7 seconds
Number of Scans: 128

From the ratio of the peak area of methacrylic acid to the peak area of chloroprene, the amount of the vinyl monomer containing a carboxyl group in the chloroprene-based polymer with respect to 100 parts by mass of the monomer units derived from chloroprene in the chloroprene-based polymer was calculated. Furthermore, the methacrylic acid copolymerization amount was subtracted from the charged amount to calculate the amount of free monomer units of the vinyl monomer containing a carboxyl group.

(Storage Stability)

Eight sealed glass containers, each containing 235 g of a chloroprene-based latex composition in a glass container with a body diameter of 19.5 cm and a volume of 225 ml, were prepared. All of them were stored at 40°C, and one of them was taken out every week, and the chloroprene-based latex inside was filtered through a 100-mesh wire screen. The period until the thickness of the chloroprene-based latex composition remaining at the bottom of the glass container became 2 mm or more, or the coagulum remaining on the wire screen, which was dried at 125°C for 1 hour, became 0.005% or more with respect to the solid content of the chloroprene-based latex composition, was recorded. The evaluation results are shown in Table 1 and Table 2.

(Mechanical Stability)

In accordance with JIS K 6828, using a Maron-type testing machine, the amount of coagulum generated when a shear force with a load of 10 kg and a rotation speed of 1000 rpm was applied for 10 minutes to 50 g of the chloroprene-based latex composition was evaluated. The coagulum adhering to the rotor part of the Maron-type testing machine was collected on an SUS 80-mesh wire screen, washed with pure water, dried under reduced pressure, and its mass was measured. The evaluation results are shown in Table 1 and Table 2. The values in the tables are calculated by the following formula after drying and weighing the generated coagulum, and a smaller value indicates higher stability against shear force.

$$\text{Mechanical stability (\%)} = \text{dried mass of coagulum [g]}/50\ \text{[g]} \times 100$$

(Odor Evaluation)

100 mL of a chloroprene-based latex composition was placed in a 250 mL polyethylene bottle, sealed by closing a lid, and stored at 40°C for 24 hours. After storage, the lid was opened, an olfactory measurement of the headspace gas was performed by olfactory panelists, and the intensity of the pungent odor was judged on a 4-point scale according to the following criteria.

1: No pungent odor
2: Slight pungent odor
3: Strong pungent odor
4: Intense pungent odor

<Preparation of Adhesive>

An adhesive was prepared by mixing the chloroprene-based latex composition from each Example and Comparative Example, a tackifier resin (terpene phenol, Tamanol E-100 (solid content concentration 53%), manufactured by Arakawa Chemical Industries, Ltd.), and a metal oxide (aqueous zinc white, AZ-SW (solid content concentration 50%), manufactured by Osaki Industry Co., Ltd.) according to the formulations described in Table 1 and Table 2.

<Evaluation of Adhesive>

The obtained adhesive was applied with a brush onto each of two canvases (25 × 150 mm) to a coating weight of

300 g/$m^2$ (based on solid content). The canvases were then dried in an 80°C atmosphere for 9 minutes. After being left at room temperature for 1 minute, the coated surfaces were bonded together and pressed with a hand roller to create an adhesion sample.

The resulting adhesion sample was subjected to the following evaluations. The results are shown in Table 1 and Table 2.

(Initial Peel Strength)

The obtained adhesion sample was left at room temperature for 10 minutes after roller pressure bonding. A T-peel test was performed using a tensile tester at a tensile speed of 200 mm/min.

(Normal State Peel Strength)

After the obtained adhesion sample was left at room temperature for 5 days, a T-peel test was performed using a tensile tester at a tensile speed of 200 mm/min.

(Water Resistance Strength)

After the obtained adhesion sample was left at room temperature for 5 days, it was further immersed in water at 23°C for 2 days, and then a T-peel test was performed using a tensile tester at a tensile speed of 200 mm/min.

(Softening Point)

The obtained adhesive was applied with a brush to a thickness of 0.5 mm on each of two sheets of a canvas (25 × 150 mm) and bonded together. Using a T-peel test, the temperature at which peeling occurred was taken as the softening point while a load of 500 g was applied and the temperature was raised at a rate of 2°C/5 min.

[Table 1]

| Table1 | | | | | | Example | | | | | |
|---|---|---|---|---|---|---|---|---|---|---|---|
| | | | | | | 1 | 2 | 3 | 4 | 5 | 6 |
| Polymerization formulation (composition with respect to 100 parts by mass of monomer) | Monomer | Initial addition | Chloroprene | | parts by mass | 29.1 | 29.1 | 38.8 | 48.5 | 19.4 | 38.8 |
| | | | Vinyl monomer containing a carboxyl group | | parts by mass | 3.0 | 3.0 | 3.0 | 3.0 | 3.0 | 3.0 |
| | | Continuous addition | Chloroprene | | parts by mass | 67.9 | 67.9 | 58.2 | 48.5 | 77.6 | 58.2 |
| | Chain transfer agent | Initial addition | Octyl mercaptan | | parts by mass | 0.09 | 0.09 | 0.12 | 0.15 | 0.06 | 0.12 |
| | | Continuous addition | Octyl mercaptan | | parts by mass | 0.21 | 0.21 | 0.18 | 0.15 | 0.24 | 0.18 |
| | Emulsifier | Initial addition | Polyvinyl alcohol | (a) | parts by mass | 1.8 | 1.8 | 0.0 | 0.0 | 0.0 | 0.0 |
| | | | | (b) | parts by mass | 1.3 | 1.7 | 3.5 | 3.5 | 3.5 | 3.5 |
| | | | | (c) | parts by mass | 0.4 | 0.0 | 0.0 | 0.0 | 0.0 | 0.0 |
| | Reducing agent | Initial addition | $Na_2SO_3$ | | parts by mass | 0.1 | 0.1 | 0.1 | 0.1 | 0.1 | 0.1 |
| | Solvent | Initial addition | Water | | parts by mass | 94 | 94 | 94 | 94 | 94 | 94 |

(continued)

| Table1 | | | Example | | | | | |
|---|---|---|---|---|---|---|---|---|
| | | | 1 | 2 | 3 | 4 | 5 | 6 |
| Polymerization conditions | Ratio of initial addition to continuous addition in raw material monomer | - | 32.1/67.9 | 32.1/67.9 | 41.8/58.2 | 51.5/48.5 | 22.4/77.6 | 41.8/58.2 |
| | Continuous addition time when polymerization time is 100 | - | 45 | 52 | 28 | 29 | 47 | 34 |
| | Conversion rate at start of continuous addition with respect to all monomers used for polymerization | % | 0 | 0 | 19 | 21 | 0 | 0 |
| | Continuous addition time | hour | 4.5 | 4.5 | 3.0 | 3.0 | 6.0 | 4.0 |
| | Polymerization time | hour | 9.9 | 8.6 | 10.8 | 10.3 | 12.8 | 11.8 |
| | Polymerization temperature | °C | 45 | 45 | 45 | 45 | 45 | 45 |
| | Conversion rate | % | 98.1 | 97.7 | 97.5 | 97.7 | 97.6 | 97.7 |

(continued)

| Table1 | | | | Example | | | | | |
|---|---|---|---|---|---|---|---|---|---|
| | | | | 1 | 2 | 3 | 4 | 5 | 6 |
| Chloroprene-based latex composition (solid content concentration 50% by mass) | Amount with respect to 100 parts by mass of chloroprene-based latex composition | Chloroprene dimer(a) | parts by mass | 0.0177 | 0.0127 | 0.0171 | 0.0202 | 0.0102 | 0.0289 |
| | | Chloroprene dimer(b) | parts by mass | 0.0461 | 0.0323 | 0.0439 | 0.0484 | 0.0270 | 0.0708 |
| | | Chloroprene dimer(c) | parts by mass | 0.0154 | 0.0000 | 0.0166 | 0.0179 | 0.0097 | 0.0271 |
| | | total of (a), (b) and (c) | parts by mass | 0.0792 | 0.0450 | 0.0776 | 0.0865 | 0.0469 | 0.1268 |
| | | polyvinyl alcohol structure (including free polyvinyl alcohol) | parts by mass | 1.71 | 1.72 | 1.72 | 1.72 | 1.72 | 1.72 |
| | Amount with respect to 100 parts by mass of chloroprene-based polymer | Polyvinyl alcohol structure in graft polymer | parts by mass | 1.06 | 1.03 | 1.07 | 1.03 | 1.06 | 1.06 |
| | | Free polyvinyl alcohol | parts by mass | 2.47 | 2.52 | 2.49 | 2.52 | 2.48 | 2.48 |
| | Amount with respect to 100 parts by mass of monomer units derived from chloroprene in the chloroprene-based polymer | Vinyl monomer containing a carboxyl group in chloroprene-based polymer | parts by mass | 1.36 | 1.37 | 1.37 | 1.37 | 1.37 | 1.37 |
| | | Free vinyl monomer containing a carboxyl group | parts by mass | 1.74 | 1.74 | 1.75 | 1.74 | 1.74 | 1.74 |
| | Evaluation | Storage stability | weeks | 7 | 7 | 7 | 8 | 7 | 8 |
| | | Mechanical stability (initial) | % | 0.070 | 0.060 | 0.068 | 0.016 | 0.064 | 0.013 |
| | | Odor evaluation | - | 1 | 1 | 1 | 2 | 1 | 2 |

(continued)

| Table1 | | | | Example | | | | | |
|---|---|---|---|---|---|---|---|---|---|
| | | | | 1 | 2 | 3 | 4 | 5 | 6 |
| Adhesive | Formulation composition | Chloroprene-based latex composition | parts by mass | 67.5 | 67.5 | 67.5 | 67.5 | 67.5 | 67.5 |
| | | Tackifier resin | parts by mass | 31.8 | 31.8 | 31.8 | 31.8 | 31.8 | 31.8 |
| | | Metal oxide | parts by mass | 0.7 | 0.7 | 0.7 | 0.7 | 0.7 | 0.7 |
| | Evaluation | Initial peel strength | N/mm | 5.2 | 4.8 | 5.1 | 5.1 | 4.7 | 4.6 |
| | | Normal state peel strength | N/mm | 4.8 | 4.5 | 4.8 | 4.7 | 4.5 | 4.4 |
| | | Water resistance strength | N/mm | 2.5 | 2.3 | 2.5 | 2.4 | 2.3 | 2.3 |
| | | Softening point | °C | 61 | 60 | 60 | 60 | 60 | 60 |

[Table 2]

| Table2 | | | | | | Comparative Example | | | | |
|---|---|---|---|---|---|---|---|---|---|---|
| | | | | | | 1 | 2 | 3 | 4 | 5 |
| Polymerization formulation (composition with respect to 100 parts by mass of monomer) | Monomer | Initial addition | Chloroprene | | parts by mass | 77.6 | 97.0 | 0 | 48.5 | 38.8 |
| | | | Vinyl monomer containing a carboxyl group | | parts by mass | 3.0 | 3.0 | 3.0 | 3.0 | 3.0 |
| | | Continuous addition | Chloroprene | | parts by mass | 19.4 | 0 | 97 | 48.5 | 58.2 |
| | Chain transfer agent | Initial addition | Octyl mercaptan | | parts by mass | 0.24 | 0.30 | 0 | 0.15 | 1.2 |
| | | Continuous addition | Octyl mercaptan | | parts by mass | 0.06 | 0.00 | 3 | 0.15 | 1.8 |
| | Emulsifier | Initial addition | Polyvinyl alcohol | (a) | parts by mass | 3.5 | 0.0 | 3.5 | 0.0 | 0.0 |
| | | | | (b) | parts by mass | 0.0 | 3.5 | 0.0 | 3.5 | 3.5 |
| | | | | (c) | parts by mass | 0.0 | 0.0 | 0.0 | 0.0 | 0.0 |
| | Reducing agent | Initial addition | $Na_2SO_3$ | | parts by mass | 0.1 | 0.1 | 0.1 | 0.1 | 0.1 |
| | Solvent | Initial addition | Water | | parts by mass | 94 | 94 | 94 | 94 | 94 |

(continued)

| Table2 | | | Comparative Example | | | | |
|---|---|---|---|---|---|---|---|
| | | | 1 | 2 | 3 | 4 | 5 |
| Polymerization conditions | Ratio of initial addition to continuous addition in raw material monomer | - | 80.6/19.4 | 100/0 | 0/100 | 51.5/48.5 | 41.8/58.2 |
| | Continuous addition time when polymerization time is 100 | - | 19 | 0 | 50 | 30 | 17 |
| | Conversion rate at start of continuous addition with respect to all monomers used for polymerization | % | 25 | - | 0 | 30 | 0 |
| | Continuous addition time | hour | 2.0 | 0.0 | 6.0 | 3.0 | 2.0 |
| | Polymerization time | hour | 10.7 | 9.8 | 12.0 | 9.9 | 11.8 |
| | Polymerization temperature | °C | 45 | 45 | 45 | 45 | 45 |
| | Conversion rate | % | 97.7 | 97.5 | 97.3 | 97.8 | 97.7 |

(continued)

| Table2 | | | | Comparative Example | | | | |
|---|---|---|---|---|---|---|---|---|
| | | | | 1 | 2 | 3 | 4 | 5 |
| Chloroprene-based latex composition (solid content concentration 50% by mass) | Amount with respect to 100 parts by mass of chloroprene-based latex composition | Chloroprene dimer(a) | parts by mass | 0.0328 | 0.0412 | 0.0096 | 0.0352 | 0.0277 |
| | | Chloroprene dimer(b) | parts by mass | 0.0905 | 0.1389 | 0.0249 | 0.0811 | 0.0879 |
| | | Chloroprene dimer(c) | parts by mass | 0.0415 | 0.0533 | 0.0032 | 0.0349 | 0.0391 |
| | | total of (a), (b) and (c) | parts by mass | 0.1648 | 0.2334 | 0.0377 | 0.1512 | 0.1547 |
| | | polyvinyl alcohol structure (including free polyvinyl alcohol) | parts by mass | 1.72 | 1.72 | 1.68 | 1.72 | 1.67 |
| | Amount with respect to 100 parts by mass of chloroprene-based polymer | Polyvinyl alcohol structure in graft polymer | parts by mass | 1.03 | 1.03 | 1.03 | 1.03 | 1.03 |
| | | Free polyvinyl alcohol | parts by mass | 2.52 | 2.52 | 2.53 | 2.51 | 2.52 |
| | Amount with respect to 100 parts by mass of monomer units derived from chloroprene in the chloroprene-based polymer | Vinyl monomer containing a carboxyl group in chloroprene-based polymer | parts by mass | 1.37 | 1.37 | 1.38 | 1.37 | 1.37 |
| | | Free vinyl monomer containing a carboxyl group | parts by mass | 1.74 | 1.75 | 1.75 | 1.74 | 1.74 |
| | Evaluation | Storage stability | weeks | 8 | 7 | 2 | 7 | 7 |
| | | Mechanical stability (initial) | % | 0.018 | 0.064 | 0.155 | 0.069 | 0.066 |
| | | Odor evaluation | - | 3 | 4 | 1 | 3 | 3 |

(continued)

| Table2 | | | | Comparative Example | | | | |
|---|---|---|---|---|---|---|---|---|
| | | | | 1 | 2 | 3 | 4 | 5 |
| Adhesive | Formulation composition | Chloroprene-based latex composition | parts by mass | 67.5 | 67.5 | 67.5 | 67.5 | 67.5 |
| | | Tackifier resin | parts by mass | 31.8 | 31.8 | 31.8 | 31.8 | 31.8 |
| | | Metal oxide | parts by mass | 0.7 | 0.7 | 0.7 | 0.7 | 0.7 |
| | Evaluation | Initial peel strength | N/mm | 4.5 | 4.4 | 4.2 | 4.6 | 4.7 |
| | | Normal state peel strength | N/mm | 4.1 | 4.2 | 3.8 | 4.2 | 4.2 |
| | | Water resistance strength | N/mm | 2.0 | 2.0 | 1.9 | 2.1 | 2.1 |
| | | Softening point | °C | 61 | 60 | 58 | 61 | 60 |

**Claims**

1. A chloroprene-based latex composition comprising a chloroprene-based polymer and water, wherein:

the chloroprene-based latex composition comprises at least one chloroprene dimer selected from a group consisting of a chloroprene dimer (a) represented by formula (a), a chloroprene dimer (b) represented by formula (b), and a chloroprene dimer (c) represented by formula (c); and

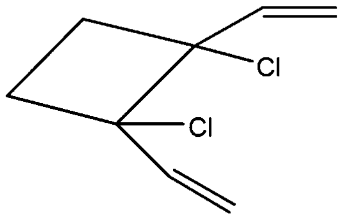

(a)

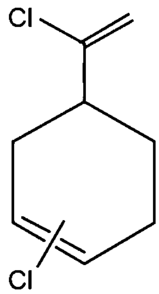

(b)

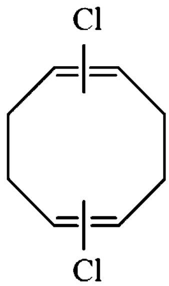

(c)

when an amount of the water is adjusted to obtain a chloroprene-based latex composition having a solid content concentration of 50% by mass, a total content of the chloroprene dimer (a), the chloroprene dimer (b), and the chloroprene dimer (c) in the chloroprene-based latex composition having a solid content concentration of 50% by mass is 0.0400 to 0.1500 parts by mass with respect to 100 parts by mass of the chloroprene-based latex composition having a solid content concentration of 50% by mass.

2. The chloroprene-based latex composition of Claim 1, wherein:

a content of the chloroprene dimer (a) in the chloroprene-based latex composition having a solid content concentration of 50% by mass is 0.0050 to 0.0500 parts by mass with respect to 100 parts by mass of the chloroprene-based latex composition having a solid content concentration of 50% by mass;
a content of the chloroprene dimer (b) in the chloroprene-based latex composition having a solid content concentration of 50% by mass is 0.0100 to 0.1000 parts by mass with respect to 100 parts by mass of the chloroprene-based latex composition having a solid content concentration of 50% by mass; and
a content of the chloroprene dimer (c) in the chloroprene-based latex composition having a solid content concentration of 50% by mass is 0 to 0.0500 parts by mass with respect to 100 parts by mass of the chloroprene-based latex composition having a solid content concentration of 50% by mass.

3. The chloroprene-based latex composition of Claim 1 or Claim 2, wherein the chloroprene-based polymer comprises a monomer unit derived from chloroprene and a monomer unit derived from a vinyl monomer containing a carboxyl group.

**4.** The chloroprene-based latex composition of Claim 3, wherein the chloroprene-based polymer comprises 0.01 to 5.00 parts by mass of the monomer unit derived from the vinyl monomer containing a carboxyl group with respect to 100 parts by mass of the monomer unit derived from chloroprene.

**5.** The chloroprene-based latex composition of Claim 3, wherein the vinyl monomer containing a carboxyl group comprises an $\alpha,\beta$-unsaturated carboxylic acid.

**6.** The chloroprene-based latex composition of Claim 1 or Claim 2, further comprising a polyvinyl alcohol.

**7.** The chloroprene-based latex composition of Claim 3, wherein the chloroprene-based polymer comprises a graft polymer comprising the monomer unit derived from chloroprene, the monomer unit derived from the vinyl monomer containing a carboxyl group, and a structure derived from a polyvinyl alcohol.

**8.** The chloroprene-based latex composition of Claim 7, wherein the chloroprene-based polymer comprises 0.30 to 5.00 parts by mass of the structure derived from the polyvinyl alcohol with respect to 100 parts by mass of the chloroprene-based polymer.

**9.** A method for producing a chloroprene-based latex composition, the method comprising:

a polymerization step of polymerizing a raw material monomer comprising a chloroprene monomer until a final polymerization conversion rate is reached,
wherein:

the polymerization step comprises a raw material monomer divided addition step,
in the polymerization step, an initial addition rate of the raw material monomer at a start of polymerization is 10.0 to 70.0% by mass with respect to 100% by mass of a total amount of the raw material monomer used for the polymerization,
in the raw material monomer divided addition step, a remaining raw material monomer is added in divided portions after the start of polymerization,
the divided addition is started before 25% by mass of the raw material monomer used for the polymerization is converted, and
the divided addition is performed over a period of 20 or more, when a polymerization time from the start of polymerization to reaching the final polymerization conversion rate is 100.

**10.** An aqueous adhesive comprising the chloroprene-based latex composition of Claim 1 or Claim 2.

## INTERNATIONAL SEARCH REPORT

International application No. **PCT/JP2024/012046**

**A. CLASSIFICATION OF SUBJECT MATTER**

***C08L 11/02***(2006.01)i; ***C08F 36/18***(2006.01)i; ***C09J 111/02***(2006.01)i
FI: C08L11/02; C08F36/18; C09J111/02

According to International Patent Classification (IPC) or to both national classification and IPC

**B. FIELDS SEARCHED**

Minimum documentation searched (classification system followed by classification symbols)

C08L11/02; C08F36/18; C09J111/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-81741 A (LANXESS DEUTSCHLAND GMBH) 10 April 2008 (2008-04-10)<br>claims, examples | 1, 9–10<br>2-8 |
| X | JP 2007-63370 A (DENKI KAGAKU KOGYO K.K.) 15 March 2007 (2007-03-15)<br>claims, examples | 1-10 |
| A | EP 0728774 A1 (ENICHEM ELASTOMERE FRANCE SA) 28 August 1996 (1996-08-28)<br>entire text | 1-10 |
| A | JP 3-203609 A (E.I. DU PONT DE NEMOURS AND COMPANY) 05 September 1991 (1991-09-05)<br>entire text | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/012046**

| Patent document cited in search report | Publication date (day/month/year) | Patent family member(s) | Publication date (day/month/year) |
|---|---|---|---|
| JP 2008-81741 A | 10 April 2008 | US 2008/0076855 A1<br>claims, examples<br>EP 1903063 A2<br>CN 101153063 A | |
| JP 2007-63370 A | 15 March 2007 | (Family: none) | |
| EP 0728774 A1 | 28 August 1996 | US 6034173 A<br>CN 1134425 A | |
| JP 3-203609 A | 05 September 1991 | US 4943402 A<br>EP 426023 A1<br>CN 1051364 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3294910 B
- JP 2005008859 A